# EUROPEAN PATENT SPECIFICATION

(11) **EP 3 869 483 B1**
(45) Date of publication and mention of the grant of the patent: **13.12.2023**
(21) Application number: 19883919.3
(22) Date of filing: 28.06.2019
(51) Int. Cl.: G08G 1/14, G08G 1/16, B62D 15/02, G01S 13/931

(54) **AUTOMATIC PARKING METHOD BASED ON MULTI-PARKING SPACE DETECTION, AND VEHICLE-MOUNTED CONTROL SYSTEM**
AUTOMATISCHES PARKVERFAHREN BASIEREND AUF MEHRFACHPARKPLÄTZEN UND FAHRZEUGMONTIERTES STEUERUNGSSYSTEM
PROCÉDÉ DE STATIONNEMENT AUTOMATIQUE BASÉ SUR LA DÉTECTION D'ESPACE DE STATIONNEMENT MULTIPLE, ET SYSTÈME DE COMMANDE MONTÉ SUR VÉHICULE

(30) Priority: 16.11.2018 CN 201811372161
(43) Date of publication of application: 25.08.2021
(73) Proprietor: Guangzhou Xiaopeng Motors Technology Co., Ltd., Guangzhou (CN)
(72) Inventor: LAI, Jianming, Guangzhou, Guangdong 510000 (CN); XIAO, Zhiguang, Guangzhou, Guangdong 510000 (CN); CHEN, Shengjun, Guangzhou, Guangdong 510000 (CN); JIANG, Shaofeng, Guangzhou, Guangdong 510000 (CN); HUANG, Yubo, Guangzhou, Guangdong 510000 (CN)
(74) Representative: Ran, Handong
(86) International application number: PCT/CN2019/093440
(87) International publication number: WO 2020/098287

(56) References cited:
- CN-A- 104 908 815
- CN-A- 105 225 519
- CN-A- 106 683 485
- CN-A- 107 609 067
- CN-A- 109 493 632
- DE-A1-102007 002 262
- JP-A- 2017 140 890
- JP-A1-WO2017 168 754
- US-A1- 2012 188 100
- US-A1- 2017 341 640

## Description

### TECHNICAL FIELD

The present disclosure relates to the field of autonomous driving technology, and more particularly, to an automatic parking method based on multi-parking space detection and a vehicle-mounted control system.

### BACKGROUND

Currently, an automatic parking system directly parks a vehicle into a usable parking space after identifying it. In this case, even if there are a number of usable parking spaces around the vehicle, a user cannot choose the parking space he/she wants to park according to his/her intention. In addition, when the vehicle misses an identified usable parking space (e.g., when the user controls the vehicle manually to leave the usable parking space), if the user wants to park in the parking space again, he/she can only manually control the vehicle to move back to the vicinity of the parking space, and wait for the automatic parking control system to identify and record the parking space again and then automatically park the vehicle into the parking space. It can be seen that in the current automatic parking solution, the user has no choice and cannot park the vehicle in an ideal parking space according to his/her own intention. JP WO2017-168754 A1 shows the features of the preamble of claims 1 and 6 and discloses an automatic parking system which includes an automatic parking control device that controls automatic parking of a vehicle having an automatic driving function, and a portable terminal that can communicate with the automatic parking control device. The automatic parking control device searches for empty parking lots and transmits the search result to the mobile terminal. When the portable terminal receives the search result of the empty parking lot from the automatic parking control device, the portable terminal transmits an instruction regarding selection of the parking lot to the automatic parking control device based on the user's operation. The automatic parking control device selects a target parking lot from the detected empty parking lots based on the instruction received from the portable terminal, and automatically parks the vehicle in the target parking lot.

### SUMMARY

The embodiments of the present disclosure provide an automatic parking method based on multi-parking space detection and a vehicle-mounted control system, capable of allowing a user can choose a parking space based on his/her intention, such that the automatic parking processing can be made more intelligent.

According to a first aspect of the embodiments of the present disclosure, an automatic parking method based on multi-parking space detection is provided. The method includes: detecting a reachable region around a vehicle, and detecting one or more usable parking spaces in the reachable region; obtaining a position of each of the one or more usable parking spaces and storing the position of each of the one or more usable parking spaces in a cache, and determining at least one of the one or more usable parking spaces as at least one candidate usable parking space; receiving a selection instruction for the at least one candidate usable parking space to determine a target parking space; and controlling the vehicle to park at the position of the target parking space. The operation of receiving the selection instruction for the at least one candidate usable parking space to determine the target parking space includes: displaying at least one electronic icon representing the at least one candidate usable parking space on a vehicle-mounted display device; and receiving the selection instruction for any of the at least one electronic icon, and determining the candidate usable parking space corresponding to the selected electronic icon as the target parking space. The method further includes, subsequent to displaying the at least one electronic icon representing the at least one candidate usable parking space on the vehicle-mounted display device: detecting a parking lot in which the vehicle is currently located based on a current position of the vehicle, when the selection instruction for the electronic icon is not received; obtaining a number of the parking lot and obtaining a parking space number of a parking space that a user is interested in based on the number of the parking lot; and detecting, from the at least one candidate usable parking space displayed on the vehicle-mounted display device, a candidate usable parking space with a same parking space number as the parking space number of the parking space that the user is interested in, and determining the candidate usable parking space with the same parking space number as the target parking space.

As an optional embodiment, in the first aspect of the embodiments of the present disclosure, the operation of determining at least one of the one or more usable parking spaces as at least one candidate usable parking space may include: determining a relative distance between the position of each usable parking space in the cache and a current position of the vehicle, and determining at least one usable parking space each having the relative distance smaller than or equal to a specified distance threshold as at least one candidate usable parking space; or obtaining a predetermined number of usable parking spaces from the cache as candidate usable parking spaces.

As an optional embodiment, in the first aspect of the embodiments of the present disclosure, the operation of displaying the at least one electronic icon representing the at least one candidate usable parking space on the vehicle-mounted display device may include: determining a relative position between the vehicle and each of the at least one candidate usable parking space based on a current position of the vehicle and the position of the candidate usable parking space; and displaying an electronic icon of the vehicle at a fixed position on the vehicle-mounted display device, and displaying the electronic icon of each of the at least one candidate usable parking space on the vehicle-mounted display device based on the relative position between the vehicle and the candidate usable parking space.

As an optional embodiment, in the first aspect of the embodiments of the present disclosure, said determining at least one of the one or more usable parking spaces as at least one candidate usable parking space includes: hiding a usable parking space that the user has missed but the vehicle has identified on the vehicle-mounted display device; and displaying the usable parking space again in response to the user sliding a screen of the vehicle-mounted display device.

As an optional embodiment, in the first aspect of the embodiments of the present disclosure, the method further includes, when the candidate usable parking space with a same parking space number as the parking space number of the parking space that the user is interested in is not detected: obtaining world coordinates of the parking space that the user is interested in based on the parking space number, detecting the world coordinates of the parking space in the cache, and determining, from parking spaces in the cache, a usable parking space having the same detected world coordinates as the world coordinates of the parking space that the user is interested in as the target parking space.

According to a second aspect of the embodiments of the present disclosure, a vehicle-mounted control system is provided. The vehicle-mounted control system include: a first detecting unit configured to detect a reachable region around a vehicle, and detect one or more usable parking spaces in the reachable region; a storing unit configured to obtain a position of each of the one or more parking spaces and store the position of each of the one or more usable parking spaces in a cache; a first determining unit configured to determine at least one of the one or more usable parking spaces as at least one candidate usable parking space; a second determining unit configured to receive a selection instruction for the at least one candidate usable parking space to determine a target parking space; and a control unit configured to control the vehicle to park at the position of the target parking space after the second determining unit determines the target parking space. The second determining unit includes: a display subunit configured to display at least one electronic icon representing the at least one candidate usable parking space on a vehicle-mounted display device; and a determining subunit configured to receive the selection instruction for any of the at least one electronic icon, and determine the candidate usable parking space corresponding to the selected electronic icon as the target parking space. The vehicle-mounted control system further includes: a detecting unit configured to detect a parking lot in which the vehicle is currently located based on a current position of the vehicle, when the selection instruction for the electronic icon is not received; an obtaining unit configured to obtain a number of the parking lot and obtain a parking space number of a parking space that a user is interested in based on the number of the parking lot; and a third determining unit configured to detect, from the at least one candidate usable parking space displayed on the vehicle-mounted display device, a candidate usable parking space with a same parking space number as the parking space number of the parking space that the user is interested in, and determine the candidate usable parking space with the same parking space number as the target parking space.

As an optional embodiment, in the second aspect of the embodiments of the present disclosure, the first determining unit may be configured to: determine a relative distance between the position of each usable parking space in the cache and a current position of the vehicle, and determine at least one usable parking space each having the relative distance smaller than or equal to a specified distance threshold as at least one candidate usable parking space; or obtain a predetermined number of usable parking spaces from the cache as candidate usable parking spaces.

As an optional embodiment, in the second aspect of the embodiments of the present disclosure, the display subunit may be configured to: determine a relative position between the vehicle and each of the at least one candidate usable parking space based on a current position of the vehicle and the position of the candidate usable parking space; and display an electronic icon of the vehicle at a fixed position on the vehicle-mounted display device, and display the electronic icon of each of the at least one candidate usable parking space on the vehicle-mounted display device based on the relative position between the vehicle and the candidate usable parking space.

As an optional embodiment, in the second aspect of the embodiments of the present disclosure, the first determining unit is further configured to: hide a usable parking space that the user has missed but the vehicle has identified on the vehicle-mounted display device; and display the usable parking space again in response to the user sliding a screen of the vehicle-mounted display device.

As an optional embodiment, in the second aspect of the embodiments of the present disclosure, the third determining unit is further configured to, when the candidate usable parking space with a same parking space number as the parking space number of the parking space that the user is interested in is not detected, obtain world coordinates of the parking space that the user is interested in based on the parking space number, detect the world coordinates of the parking space in the cache, and determine, from parking spaces in the cache, a usable parking space having the same detected world coordinates as the world coordinates of the parking space that the user is interested in as the target parking space.

In a third aspect of the embodiments of the present disclosure, a vehicle-mounted control system is provided. The vehicle-mounted control system includes: a memory storing executable program codes; and a processor coupled to the memory. The processor is configured to invoke the executable program codes stored in the memory to perform the automatic parking method based on multi-parking space detection according to the first aspect of the embodiments of the present disclosure.

In a fourth aspect of the embodiments of the present disclosure, a computer readable storage medium is provided. The computer readable storage medium stores a computer program causing a computer to perform the automatic parking method based on multi-parking space detection according to the first aspect of the embodiments of the present disclosure.

In a fifth aspect of the embodiments of the present disclosure, a computer program product is provided. The computer program product, when executed on a computer, causes the computer to perform a part or all of the steps in any of the methods according to the first aspect of the embodiments of the present disclosure.

In a sixth aspect of the embodiments of the present disclosure, an application publishing platform is provided. The application publishing platform is configured to publish a computer program product which, when executed on a computer, causes the computer to perform a part or all of the steps in any of the methods according to the first aspect of the embodiments of the present disclosure.

Compared with the related art, the embodiments of the present disclosure have the following advantageous effects.

In the embodiments of the present disclosure, a vehicle-mounted control system can detect usable parking spaces in a reachable region around a vehicle, store the detected usable parking spaces in a cache, and determine at least one usable parking space having a high use value for selection by a user. The user can select a parking space he/she likes based on his/her intention, such that the automatic parking processing can be made more intelligent. In addition, with the embodiments of the present disclosure, the usable parking spaces stored in the vehicle-mounted control system may include one or more usable parking spaces the vehicle has passed by, for selection by the user as desired, thereby further improving the user's experience.

### BRIEF DESCRIPTION OF DRAWINGS

In order to describe the solutions according to the embodiments of the present disclosure more clearly, the figures used in the embodiments will be introduced briefly below. It is apparent to those skilled in the art that the figures described below only illustrate some embodiments of the present disclosure and other figures can be obtained from these figures without applying any inventive skills. In the figures:
FIG. 1 is a flowchart illustrating an automatic parking method based on multi-parking space detection according to an embodiment of the present disclosure;
FIG. 2 is a flowchart illustrating another automatic parking method based on multi-parking space detection according to an embodiment of the present disclosure;
FIG. 3 is a flowchart illustrating yet another automatic parking method based on multi-parking space detection according to an embodiment of the present disclosure;
FIG. 4 is a schematic diagram showing a structure of a vehicle-mounted control system according to an embodiment of the present disclosure;
FIG. 5 is a schematic diagram showing a structure of another vehicle-mounted control system according to an embodiment of the present disclosure;
FIG. 6 is a schematic diagram showing a structure of yet another vehicle-mounted control system according to an embodiment of the present disclosure;
FIG. 7 is a schematic diagram showing a structure of still another vehicle-mounted control system according to an embodiment of the present disclosure;
FIG. 8 is a schematic diagram showing a reachable region;
FIG. 9 is a schematic diagram showing usable parking spaces;
FIG. 10 is a schematic diagram showing a vehicle-mounted display device; and
FIG. 11 is a schematic diagram for assisting in explaining a conversion of position coordinates into a relative position.

### DESCRIPTION OF EMBODIMENTS

In the following, the solutions according to the embodiments of the present disclosure will be described clearly and completely with reference to the figures. Obviously, the embodiments described below are only some, rather than all, of the embodiments of the present disclosure. All other embodiments that can be obtained by those skilled in the art based on the embodiments described in the present disclosure without any inventive efforts are to be encompassed by the scope of the present disclosure, which is defined by the appended claims.

It is to be noted that the terms "first", "second", "third", "fourth", and so on as used in the description and claims are used for distinguishing different objects from one another, rather than implying any specific sequence. The terms "including" and "having", and any variants thereof, as used in the embodiments of the present disclosure are intended to cover non-exclusive inclusions. For example, a process, method, system, product, or device that is described as including a series of steps or units is not limited to the described steps or units, but may optionally include one or more steps or units that are not described, or may optionally further include other steps or units that are inherent to the process, method, product, or device.

The embodiments of the present disclosure provide an automatic parking method based on multi-parking space detection and a vehicle-mounted control system, capable of allowing a user can choose a parking space based on his/her intention, such that the automatic parking processing can be made more intelligent.

The solutions of the present disclosure will be described in detail below with reference to the embodiments.

### Embodiment 1

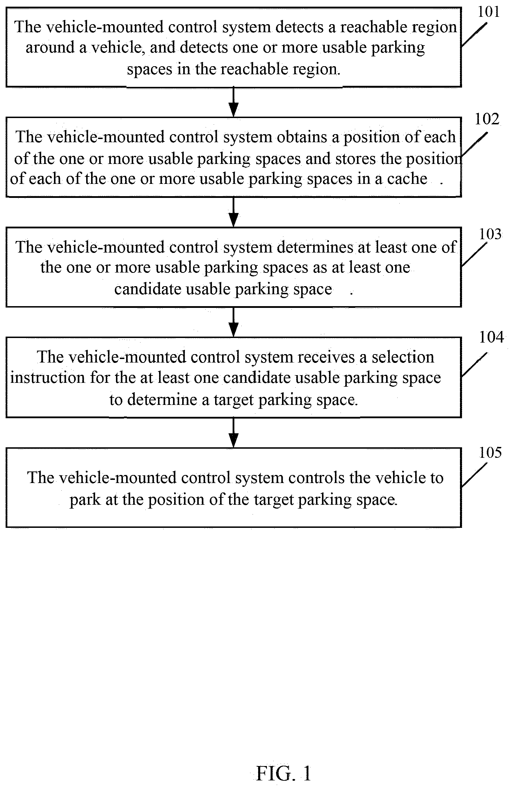

Reference is now made to FIG. 1, which is a flowchart illustrating an automatic parking method based on multi-parking space detection according to an embodiment of the present disclosure. As shown in FIG. 1, a control method in a vehicle-mounted control system may include the following steps.

At 101, the vehicle-mounted control system detects a reachable region around a vehicle, and detects one or more usable parking spaces in the reachable region.

In an embodiment of the present disclosure, the reachable region refers to an region the vehicle can enter normally without obstacles blocking its normal movement.

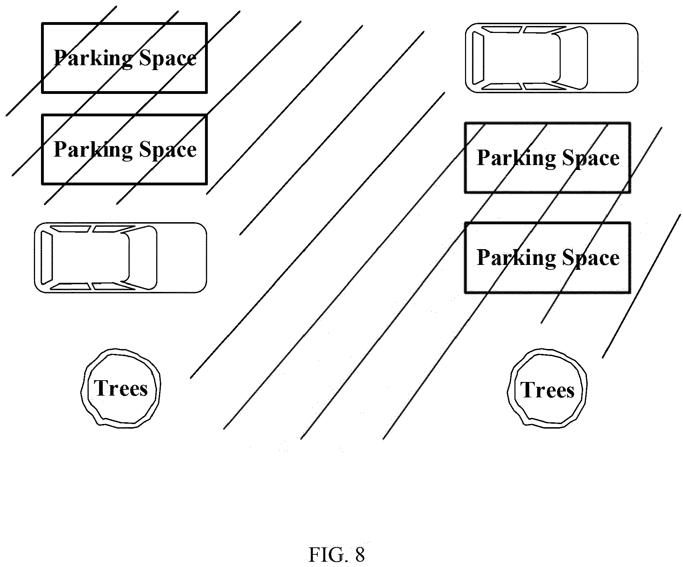

As an optional implementation, the vehicle-mounted control system may have a built-in Global Positioning System (GPS) module or radar. The vehicle-mounted control system may obtain an image around a current position of the vehicle using its built-in GPS module or radar, identify boundaries of obstacles in the image, and obtain an enclosed region by connecting the boundaries of the obstacles as the reachable region. The reachable region can be shown in FIG. 8, where the shaded part is the reachable region.

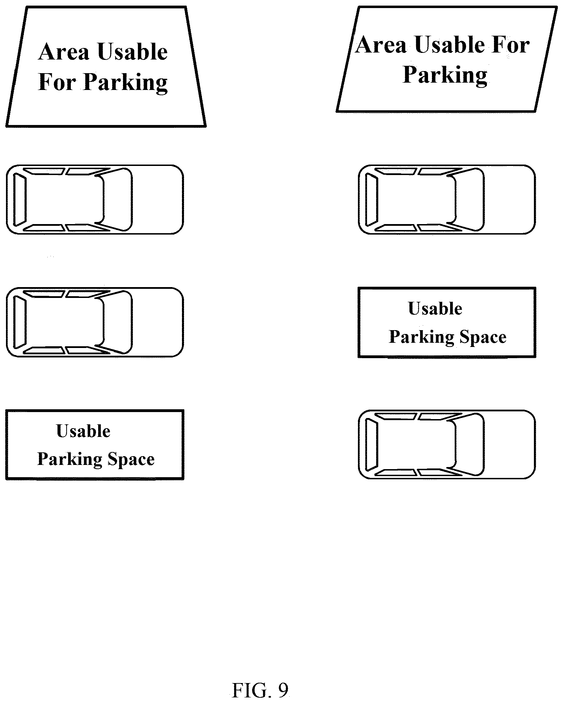

In an embodiment of the present disclosure, an usable parking space refers to a region in which a vehicle can be parked normally. It can be a vacant parking space obtained by the vehicle-mounted control system identifying a parking space line on the ground around the vehicle, or a region identified by the vehicle-mounted control system in the reachable region as having an area and shape meeting a parking requirement, as shown in FIG. 9.

As an optional implementation, the vehicle-mounted control system may determine whether a user has an intention to park based on a speed of the vehicle and the user's historical parking positions. For example, when the user drives the vehicle to a vicinity of a restaurant, the vehicle-mounted control system may determine that the restaurant is a frequently visited restaurant by accessing the user's historical parking position records in the system, and detect that the speed of the vehicle has dropped below a predetermined speed or even to 0km/h (as the vehicle's engine has not been turned off, it may be determined by default as a temporary stop). Based on the above data, the vehicle-mounted control system may determine that the user has the intention to park here, and then automatically activate a detecting module to detect a reachable region around the vehicle, and detect one or more usable parking spaces in the reachable region.

With the above method, the vehicle-mounted control system can automatically activate the detecting module to detect the usable parking space(s) when the user drives to a vicinity of a place where the user often parks, such that the vehicle-mounted control system can be made more intelligent and the user experience can be improved.

As another optional implementation, the vehicle-mounted control system can obtain a destination of the user's trip from a navigation system, and automatically activate the detecting module when the user drives to the vicinity of the destination to detect a reachable region around the vehicle, and detect one or more usable parking spaces in the reachable region.

With the above method, the vehicle-mounted control system can automatically activate the detecting module to detect the usable parking space(s) when the user drives to the vicinity of the destination recorded in the navigation system, such that the vehicle-mounted control system can be made more intelligent and the user experience can be improved.

At 102, the vehicle-mounted control system obtains a position of each of the one or more parking spaces and stores the position of each of the one or more usable parking spaces in a cache.

In an embodiment of the present disclosure, the vehicle-mounted control system can continuously detect usable parking spaces around the vehicle while the vehicle is moving, and store the position of at least one detected usable parking space in the cache, but it may not necessarily display all usable parking spaces in the cache via a vehicle-mounted display device.

As an optional implementation, the vehicle-mounted control system may separately store positions of parking places frequently used by the user, including for example, a position of a parking space in a underground garage of a community where the user lives, a position of a parking space in a parking lot of the user's office, or an open space near the user's residence. The vehicle-mounted control system can obtain the positions of these parking spaces and store them in association with their corresponding places.

With the above method, when the user drives to a frequently visited place, the vehicle-mounted control system can quickly obtain a position of a parking space associated with the place from the cache, which reduces the time for detection and improves the processing speed of the vehicle-mounted control system, thereby improving the user experience.

At 103, the vehicle-mounted control system determines at least one of the one or more usable parking spaces as at least one candidate usable parking space.

As an optional implementation, the vehicle-mounted control system may determine a relative distance between the position of each usable parking space in the cache and a current position of the vehicle, and determine at least one usable parking space each having the relative distance smaller than or equal to a specified distance threshold as at least one candidate usable parking space.

For example, assuming there are in the cache an usable parking space A having a relative distance of 2 meters from its position to the current position of the vehicle, an usable parking space B having a relative distance of 5 meters from its position to the current position of the vehicle, and an usable parking space C having a relative distance of 10 meters from its position to the current position of the vehicle. If the specified distance threshold is 5 meters, the vehicle-mounted control system can determine the usable parking space A and the usable parking space B as candidate usable parking spaces.

As another optional implementation, the vehicle-mounted control system may obtain a predetermined number of usable parking spaces from the cache as candidate usable parking spaces. Here, the predetermined number can be set by default by the vehicle-mounted control system or manually inputted by the user.

With the above two methods, the vehicle-mounted control system can display in a limited display area of a screen the usable parking spaces having use values and high probabilities of being selected by the user. This makes the parking spaces displayed on the screen for selection by the user more reasonable.

As another optional implementation, the vehicle-mounted control system can hide an usable parking space that the user has missed but the vehicle has identified on the vehicle-mounted display device. However, the user can slide the screen at any time to make the usable parking space displayed again. With the above method, if the user still wants to park in a certain parking space after passing it, he/she only needs to make the parking space displayed again on the vehicle-mounted display device and select the parking space, and the vehicle-mounted control system can automatically control the vehicle in accordance with the selection instruction to park in the parking space.

At 104, the vehicle-mounted control system receives a selection instruction for the at least one candidate usable parking space to determine a target parking space.

In an embodiment of the present disclosure, the vehicle-mounted control system may display at least one electronic icon representing the at least one candidate usable parking space on a vehicle-mounted display device, and in response to receiving the selection instruction for any of the at least one electronic icon, determine the candidate usable parking space corresponding to the selected electronic icon as the target parking space

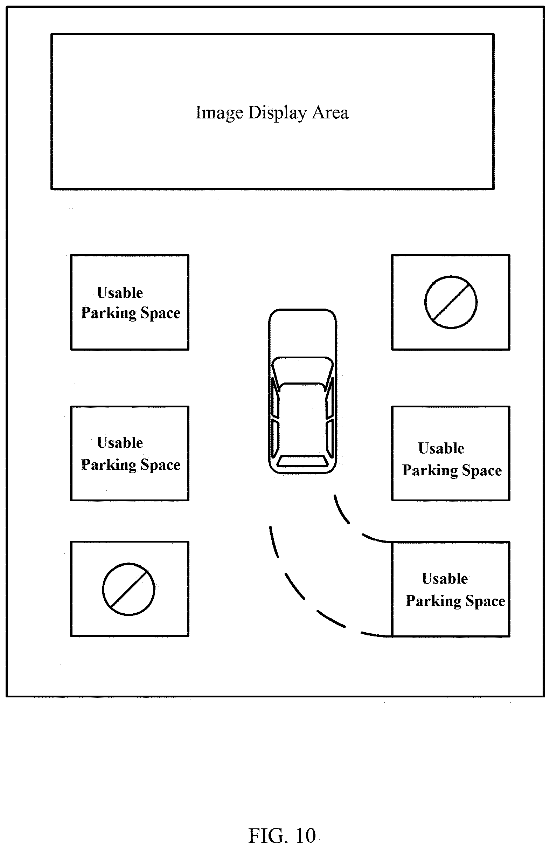

Here, the above vehicle-mounted display device may be shown in FIG. 10, where a prohibition symbol indicates that the region cannot be used for parking or that another vehicle has already parked in the region.

At 105, the vehicle-mounted control system controls the vehicle to park at the position of the target parking space.

In an embodiment of the present disclosure, the vehicle-mounted control system can obtain the target parking space according to a result of the user's manual selection on the screen or by identifying the user's voice instruction, and generate a reference driving trajectory based on a relative position between the vehicle and the parking space. In response to detecting a "start parking" command, the vehicle-mounted control system can control the vehicle to park into the target parking place at a predetermined speed along the reference driving trajectory.

In the method described in FIG. 1, the vehicle-mounted control system can detect usable parking spaces in the reachable region around the vehicle, store the detected usable parking spaces in the cache, and determine at least one usable parking space having a high use value for selection by the user. The user can select the parking space he/she likes based on his/her intention, such that the automatic parking processing can be made more intelligent.

### Embodiment 2

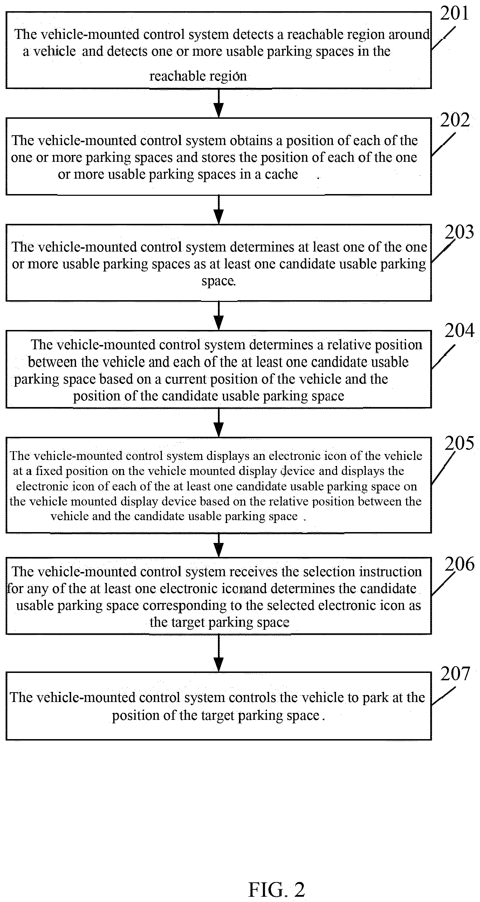

Reference is now made to FIG. 2, which is a flowchart illustrating another automatic parking method based on multi-parking space detection according to an embodiment of the present disclosure. As shown in FIG. 2, a control method in a vehicle-mounted control system may include the following steps.

Step 201 to Step 203 are the same as Step 101 to Step 103 in Embodiment 1, and description thereof will be omitted here.

At 204, the vehicle-mounted control system determines a relative position between the vehicle and each of the at least one candidate usable parking space based on a current position of the vehicle and the position of the candidate usable parking space.

As an optional implementation, the vehicle-mounted control system may determine the relative position between the vehicle and the each of the at least one candidate parking space based on the current position of the vehicle and the position of the candidate usable parking space as follows. The vehicle-mounted control system can obtain position coordinates of the vehicle and the candidate usable parking space using a built-in GPS module. The position coordinates are represented in world coordinates. Since the reference of the world coordinates is the earth, the world coordinates are fixed. The vehicle-mounted control system can convert the position coordinates of the vehicle and the candidate usable parking space into the relative position between the vehicle and the candidate usable parking space.

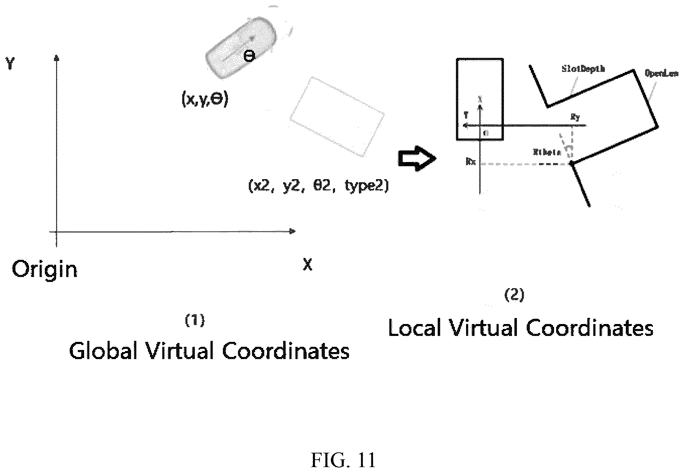

A detailed description will be given below with reference to FIG. 11. Here, as shown in (1) of FIG. 11, the vehicle-mounted control system can set an origin for each parking lot or parking region, generate a global virtual coordinate system based on the origin of the parking lot or parking region, and then obtain the global position coordinates of the vehicle and the usable parking space using the built-in GPS module. Here, the global position coordinates of the vehicle can be denoted as (x, y, Θ), where Θ represents the angle of the center axis of the vehicle relative to x axis of the virtual coordinate system, and the global position coordinates of the usable parking space can be denoted as (x2, y2, Θ2, type2), where Θ2 represents the angle of the central axis of the usable parking space relative to x axis of the virtual coordinate system, and type2 represents a type of the usable parking space.

Referring to (2) of FIG. 11, the vehicle-mounted control system can generate a local virtual coordinate system with the center of the vehicle as the origin based on the center of the vehicle. In this case, the default position coordinates of the vehicle in the local virtual coordinate system is (0, 0, θ). Then, according to the global position coordinates of the vehicle and the usable parking space in the global virtual coordinate system, the position coordinates of the usable parking space in the local virtual coordinate system can be calculated, and then the global coordinates can be transformed into the coordinates of the usable parking space relative to the vehicle. After that, the vehicle-mounted control system can obtain the real-time relative position between the usable parking space and the vehicle according to the real-time global position of the vehicle and the above transformation.

At 205, the vehicle-mounted control system displays an electronic icon of the vehicle at a fixed position on the vehicle-mounted display device, and displays the electronic icon of each of the at least one candidate usable parking space on the vehicle-mounted display device based on the relative position between the vehicle and the candidate usable parking space.

As an optional implementation, the vehicle-mounted display device of the vehicle may also be provided with a "refresh" virtual key. When the user is not satisfied with the candidate usable parking spaces displayed by the vehicle-mounted control system on the vehicle-mounted display device, he/she can click the "refresh" key and the vehicle-mounted control system can detect a refresh command, such that the vehicle-mounted control system can re-obtain a number of usable parking spaces from the cache as candidate usable parking spaces and display them on the vehicle-mounted display device. Here, the re-obtained usable parking spaces may not include the usable parking spaces that have been displayed on the vehicle-mounted display device.

With the above method, the vehicle-mounted control system can refresh the candidate usable parking spaces displayed on the vehicle-mounted display device in response to detecting the user's "refresh" instruction, so as to provide more parking spaces for selection by the user, thereby improving the user experience.

As another optional implementation, the electronic icon of the vehicle and the electronic icon of the candidate usable parking space can be highlighted, e.g., by increasing brightness of a frame of the icon or changing a color of the icon, etc., when the vehicle-mounted control system detects that the user clicks them on the vehicle-mounted display device.

With the above method, the user's feel when operating on the vehicle-mounted display device can be improved, thereby improving the user experience.

At 206, the vehicle-mounted control system receives the selection instruction for any of the at least one electronic icon, and determines the candidate usable parking space corresponding to the selected electronic icon as the target parking space.

In an embodiment of the present disclosure, the user can select the electronic icon by clicking on a touch screen of the vehicle-mounted display device.

As an optional implementation, the vehicle-mounted control system may have a built-in voice control module, which may be configured to identify the user's voice command for selecting a parking space. The voice command the voice control module can identify may include e.g., Number X usable parking space on the screen, the last but one usable parking space from the right on the screen, etc. The embodiment of the present disclosure is not limited to any of these examples.

With the above method, the user may control the vehicle-mounted control system to select a parking space using a voice command, which reduces operation steps performed by the user's hand. The user can at the same time hold the steering wheel with both hands to drive the vehicle. This not only improves the user experience, but also protects the user's safety.

As another optional implementation, the voice control module of the vehicle-mounted control system may also have a built-in voiceprint library, and the user can record the driver's voice in the voiceprint library of the voice control module in advance. Then the voice control module may only recognize the voice commands of the voices stored in the voiceprint library.

With the above method, by recording the driver's voice, the voice control module only recognizes the driver's voice, thereby preventing other people's voices or noises from affecting the identification efficiency of the voice control module and improving the processing speed of the vehicle-mounted control system. It also avoids unintentional voice commands from other users than the driver, which would otherwise make the vehicle be parked in the parking space that the user does not want to park the vehicle in.

Step 207 is the same as Step 105 in Embodiment 1, and description thereof will be omitted here.

Here, when compared with the method described in FIG. 1, the method described in FIG. 2 allows displaying the candidate usable parking space(s) as the electronic icon(s) for selection by the user, which provides the user with a visual reference to assisting the driver of the vehicle in establishing a mapping relationship between a usable parking region displayed on a parking interface and an actual usable parking region, thereby improving the driver's parking experience.

### Embodiment 3

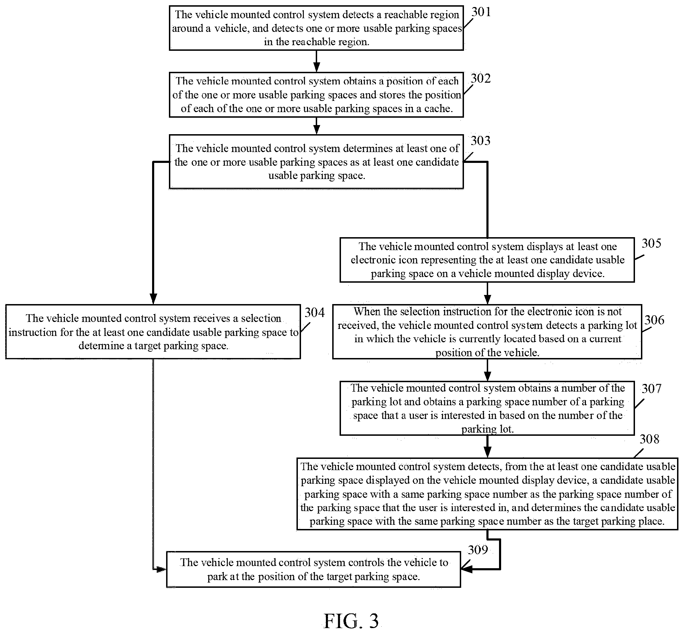

Reference is now made to FIG. 3, which is a schematic flowchart of yet another automatic parking method based on multi-parking space detection disclosed in an embodiment of the present disclosure. As shown in Fig. 3, the control method of the vehicle-mounted control system may include the following steps.

Step 301 to Step 303 are the same as Step 101 to Step 103 in Embodiment 1, and description thereof will be omitted here. After Step 303, the method can proceed with Step 304 or Step 305.

Step 304 is the same as Step 104 in Embodiment 1, and description thereof will be omitted here. After Step 304, the method can proceed with Step 309 directly.

At 305, the vehicle-mounted control system displays at least one electronic icon representing the at least one candidate usable parking space on a vehicle-mounted display device.

At 306, when the selection instruction for the electronic icon is not detected, the vehicle-mounted control system detects a parking lot in which the vehicle is currently located based on a current position of the vehicle.

As an optional implementation, when no parking space selection instruction is detected, the vehicle-mounted control system can determine a candidate usable parking space closest to the current position of the vehicle as the target parking space, based on the relative position between the vehicle and each of the at least one candidate usable parking space displayed on the screen.

With the above method, when no parking space selection instruction is detected, the target parking space allowing the vehicle to be parked quickly can be determined, which saves parking time and improves the user experience.

At 307, the vehicle-mounted control system obtains a number of the parking lot and obtains a parking space number of a parking space that a user is interested in based on the number of the parking lot.

In an embodiment of the present disclosure, the vehicle-mounted control system can obtain the number of the parking lot as follows. The vehicle-mounted control system obtains the global position coordinates (x, y, θ) of the vehicle and a correspondence list 1 between GPS and pre-stored numbers of parking lots (i.e., parking lot IDs) and obtains the parking lot ID from the correspondence list 1 based on the global position coordinates of the vehicle. Based on the obtained parking lot ID, the vehicle-mounted control system invokes a correspondence list 2 between positions of parking spaces in the parking lot and the numbers of the parking spaces (i.e., parking space IDs), and then obtains the number of each parking space in the parking lot from the correspondence list 2.

As an optional implementation, in an embodiment of the present disclosure, the parking space that the user is interested in may be the parking space number of the parking space used by the user for the largest number of times as obtained by the vehicle-mounted control system accessing the user's historical parking records in the parking lot based on the number of the parking lot.

At 308, the vehicle-mounted control system detects, from the at least one candidate usable parking space displayed on the vehicle-mounted display device, a candidate usable parking space with a same parking space number as the parking space number of the parking space that the user is interested in, and determines the candidate usable parking space with the same parking space number as the target parking place.

As an optional implementation, when the candidate usable parking space with the same parking space number as the parking space number of the parking space that the user is interested in is not detected in the vehicle-mounted display device, the vehicle-mounted control system can obtain the world coordinates of the parking space that the user is interested in based on the parking space number, detect the world coordinates of the usable parking spaces in the cache, and determine, from the parking spaces in the cache, the usable parking space having the same detected world coordinates as the world coordinates of the parking space that the user is interested in as the target parking space.

Step 309 is the same as Step 105 in Embodiment 1, and description thereof will be omitted here.

When compared with the method described in FIG. 1, the method described in FIG. 3 can further determine the target parking space according to a predetermined calculation rule when the selection instruction of the usable parking space is not detected. This makes the process of automatic parking more intelligent, and further improves the user experience.

### Embodiment 4

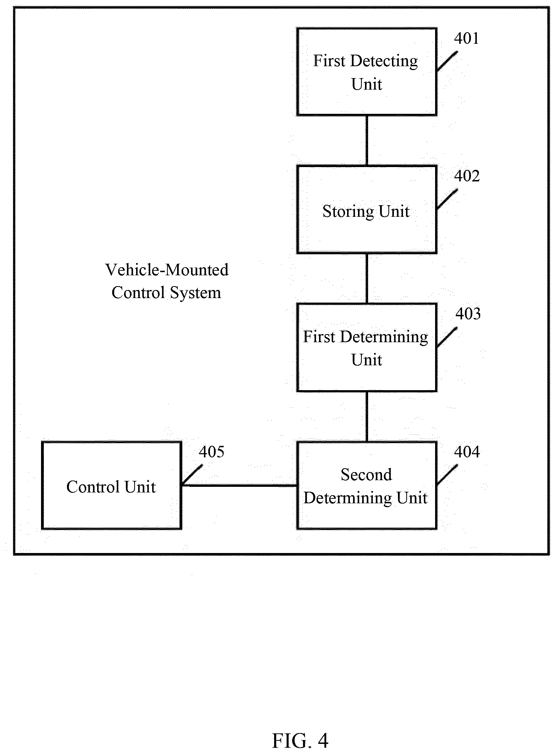

Reference is made to FIG. 4, which is a schematic diagram showing a structure of a vehicle-mounted control system according to an embodiment of the present disclosure. As shown in FIG. 4, the vehicle-mounted control system may include:
a first detecting unit 401 configured to detect a reachable region around a vehicle, and detect one or more usable parking spaces in the reachable region;
a storing unit 402 configured to obtain a position of each of the one or more parking spaces and store the position of each of the one or more usable parking spaces in a cache;
a first determining unit 403 configured to determine at least one of the one or more usable parking spaces as at least one candidate usable parking space;
a second determining unit 404 configured to receive a selection instruction for the at least one candidate usable parking space to determine a target parking space; and
a control unit 405 configured to control the vehicle to park at the position of the target parking space after the second determining unit 404 determines the target parking space.

As an optional implementation, the first detecting unit 401 may have a built-in Global Positioning System (GPS) module or radar for obtaining an image around a current position of the vehicle.

As another optional implementation, the first detecting unit 401 may further have a built-in speed detection module for detecting whether a speed of the vehicle has dropped below a predetermined speed.

As another optional implementation, the first detecting unit 401 may be further configured to automatically activate a detecting module to detect a reachable region around the vehicle when the user drives the vehicle to a vicinity of a destination indicated by a navigation system, and detect one or more usable parking spaces in the reachable region.

As an optional implementation, the storing unit 402 may be configured to separately store positions of parking places frequently used by the user.

As an optional implementation, the control unit 405 may have a built-in generating module for generating a reference driving trajectory based on the current position of the vehicle and the position of the target parking space.

Here, the vehicle-mounted control system described in FIG. 4 can detect usable parking spaces in the reachable region around the vehicle, store the detected usable parking spaces in the cache, and determine at least one usable parking space having a high use value for selection by the user. The user can select the parking space he/she likes based on his/her intention, such that the automatic parking processing can be made more intelligent.

### Embodiment 5

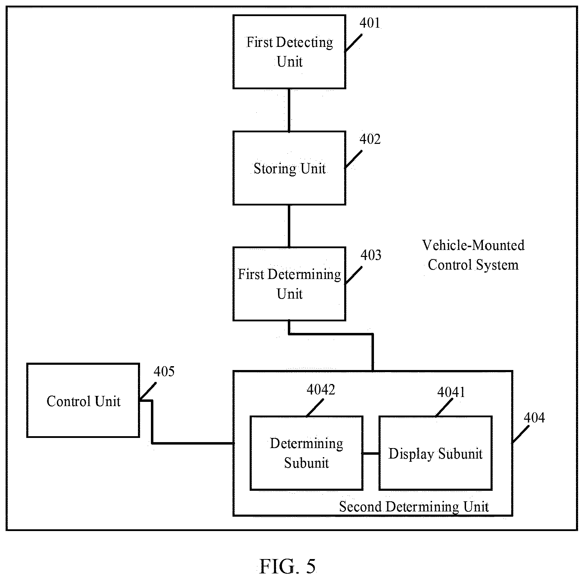

Reference is now made to FIG. 5, which is a schematic diagram showing a structure of another vehicle-mounted control system according to an embodiment of the present disclosure. Here, the vehicle-mounted control system shown in FIG. 5 is obtained by optimizing the vehicle-mounted control system shown in FIG. 4. Compared with the vehicle-mounted control system shown in FIG. 4, the first determining unit 403 in the vehicle-mounted control system shown in FIG. 5 is specifically configured to determine a relative distance between the position of each usable parking space in the cache and a current position of the vehicle, and determine at least one usable parking space each having the relative distance smaller than or equal to a specified distance threshold as at least one candidate usable parking space; or obtain a predetermined number of usable parking spaces from the cache as candidate usable parking spaces

The second determining unit 404 in the vehicle-mounted control system shown in FIG. 5 may include:
a display subunit 4041 configured to display at least one electronic icon representing the at least one candidate usable parking space on a vehicle-mounted display device; and
a determining subunit 4042 configured to receive the selection instruction for any of the at least one electronic icon, and determine the candidate usable parking space corresponding to the selected electronic icon as the target parking space.

The display subunit 4041 may be specifically configured to determine a relative position between the vehicle and each of the at least one candidate usable parking space based on a current position of the vehicle and the position of the candidate usable parking space; and display an electronic icon of the vehicle at a fixed position on the vehicle-mounted display device, and display the electronic icon of each of the at least one candidate usable parking space on the vehicle-mounted display device based on the relative position between the vehicle and the candidate usable parking space.

As an optional implementation, the display subunit 4041 may have a built-in GPS module for obtaining world coordinates of the vehicle and the candidate usable parking space(s).

As another optional implementation, the display subunit 4041 may be further configured to cause, when the user is not satisfied with the candidate usable parking spaces displayed by the vehicle-mounted control system on the vehicle-mounted display device, the vehicle-mounted control system to re-obtain a number of usable parking spaces from the cache as candidate usable parking spaces and display them on the vehicle-mounted display device. Here, the re-obtained usable parking spaces may not include the usable parking spaces that have been displayed on the vehicle-mounted display device.

As another optional implementation, the display subunit 4041 may have a built-in screen backlight adjustment module for adjusting brightness or color of a frame of an electronic icon displayed on the vehicle display device. The electronic icon of the vehicle or the electronic icon of the candidate usable parking space can be highlighted when the vehicle-mounted control system detects that the user clicks them on the vehicle-mounted display device, such that the user's operating feel when operating on the vehicle-mounted display device can be improved, thereby improving the user experience.

As an optional implementation, the determining subunit 4042 may have a built-in voice control module configured to identify the user's voice command for selecting a parking space. Correspondingly, the voice control module may also have a built-in voiceprint library for recording the voice of the driver.

The built-in voice control module can reduce operation steps performed by the user's hand, and the user can at the same time hold the steering wheel with both hands to drive the vehicle. This not only improves the user experience, but also protects the user's safety. The built-in voiceprint library can prevent other people's voices or noises from affecting the identification efficiency of the voice control module and improving the processing speed of the vehicle-mounted control system. It also avoids unintentional voice commands from other users than the driver, which would otherwise make the vehicle be parked in the parking space that the user does not want to park the vehicle in.

When compared with the vehicle-mounted control system shown in FIG. 4, the vehicle-mounted control system described in FIG. 5 allows displaying the candidate usable parking space(s) as the electronic icon(s) for selection by the user, which provides the user (e.g., driver) with a visual reference to assisting the driver of the vehicle in establishing a mapping relationship between a usable parking region displayed on a parking interface and an actual usable parking region, thereby improving the driver's parking experience.

### Embodiment 6

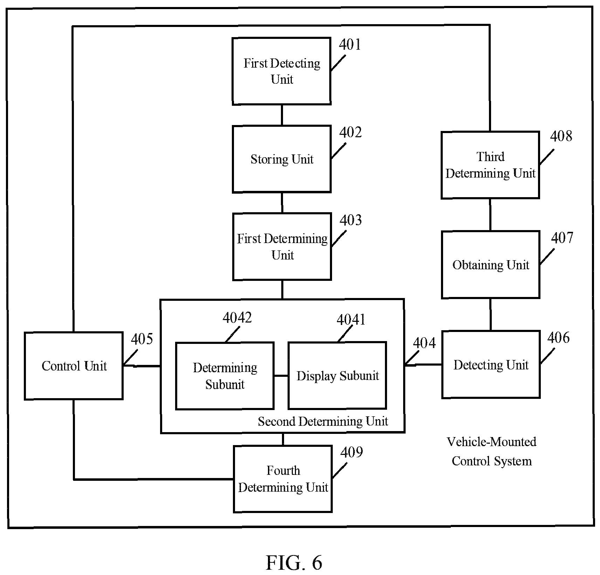

Reference is now made to FIG. 6, which is a schematic diagram showing a structure of yet another vehicle-mounted control system according to an embodiment of the present disclosure. Here, the vehicle-mounted control system shown in FIG. 6 is obtained by optimizing the vehicle-mounted control system shown in FIG. 5. When compared with the vehicle-mounted control system shown in FIG. 5, the vehicle-mounted control system shown in FIG. 6 may further include:
a detecting unit 406 configured to detect a parking lot in which the vehicle is currently located based on a current position of the vehicle, when the selection instruction for the electronic icon is not received;
an obtaining unit 407 configured to obtain a number of the parking lot and obtain a parking space number of a parking space that a user is interested in based on the number of the parking lot;
a third determining unit 408 configured to detect, from the at least one candidate usable parking space displayed on the vehicle-mounted display device, a candidate usable parking space with a same parking space number as the parking space number of the parking space that the user is interested in, and determine the candidate usable parking space with the same parking space number as the target parking place; and
a fourth determining unit 409 configured to determine a candidate usable parking space closest to a current position of the vehicle as the target parking space based on a relative position between the vehicle and each of the at least one candidate usable parking space, when the selection instruction for the electronic icon is not received.

As an optional implementation, the second detecting unit 407 may have a built-in recording module for recording numbers of parking lots and parking space numbers.

As an optional implementation, the third detecting unit 409 may have a built-in GPS module for obtaining world coordinates of the parking space that the user is interested in and world coordinates of each usable parking space in the cache.

Here, when compared with the vehicle-mounted control system described in FIG. 5, the vehicle-mounted control system described in FIG. 6 can further determine the target parking space according to a predetermined calculation rule when the selection instruction of the usable parking space is not detected. This makes the process of automatic parking more intelligent, and further improves the user experience.

### Embodiment 7

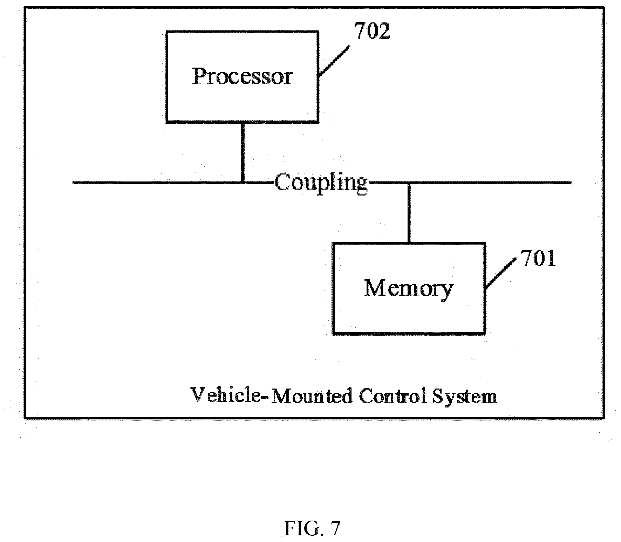

Reference is now made to FIG. 7, which is a schematic diagram showing a structure of another vehicle-mounted control system disclosed in an embodiment of the present disclosure. As shown in FIG 7, the vehicle-mounted control system may include:
a memory 701 storing executable program codes; and
a processor 702 coupled to the memory 701.

The processor 702 is configured to invoke the executable program codes stored in the memory 701 to perform the automatic parking method based on multi-parking space detection according to any of FIGS. 1~3.

A computer readable storage medium is also provided according to an embodiment of the present disclosure. The computer readable storage medium stores a computer program causing a computer to perform the method for automatic parking based on multi-parking space detection according to any of FIGS. 1~3.

An application publishing platform is also provided according to an embodiment of the present disclosure. The application publishing platform is configured to publish a computer program product which, when executed on a computer, causes the computer to perform a part or all of the steps in any of the above method embodiments.

It can be appreciated that, in various embodiments of the present disclosure, the values of the sequence numbers of the respective processes above do not mean a necessary order in which the processes are performed. The order in which the processes are performed depends on their functions and internal logics. The implementation of the embodiments of the present disclosure is not limited to any exemplary order.

The units described above as separate components may or may not be physically separated. The components shown as units may or may not be physical units, and they may be located in one place, or distributed across a number of network elements. Some or all of the units can be selected according to actual needs to achieve the purpose of the solutions of the embodiments.

In addition, each functional unit in various embodiments of the present disclosure may be integrated into one processing unit, or each unit may be standalone physically, or two or more units may be integrated into one unit. The above integrated unit can be implemented in the form of hardware or software functional unit.

If the above integrated unit is implemented in the form of software functional unit and sold or used as a standalone product, it can be stored in a computer accessible memory. Based on this understanding, the essence of the technical solution of the present disclosure, or the part thereof that contributes to the related art, or all or part of the technical solution, can be embodied in the form of a software product. The computer software product can be stored in a memory, and includes several requests to make a computer device (which may be a personal computer, a server, or a network device, etc., specifically a processor in a computer device) perform a part or all of the steps in the above method according to any of the embodiments of the present disclosure.

It can be appreciated by those skilled in the art that all or part of the steps in the method according to any of the above embodiments can be performed by relevant hardware executing instructions of a program. The program can be stored in a computer readable storage medium, including Read Only Memory (ROM), Random Access Memory (RAM), Programmable Read Only Memory (PROM), Erasable Programmable Read Only Memory (EPROM), One-Time Programmable Read Only Memory (OTPROM), Electronically Erasable Programmable Read Only Memory (EEPROM), Compact Disc Read Only Memory, (CD-ROM), or other optical disc storage, magnetic disk storage, tape storage, or any other computer readable medium that can be used to carry or store data.

The automatic parking method based on multi-parking space detection and a vehicle-mounted control system according to any of the embodiments of the present disclosure have been described in detail above. Specific examples are given herein to illustrate the principles and implementations of the present disclosure. The above description of the embodiments is only used to facilitate understanding the methods according to the present disclosure and the core idea thereof. At the same time, changes can be made to the specific implementation and the scope of application by those skilled in the art based on the concept of the present disclosure. In summary, the content of the description should not be construed as limiting the present disclosure.

## Claims

1. An automatic parking method based on multi-parking space detection, comprising:
detecting a reachable region around a vehicle, and detecting one or more usable parking spaces in the reachable region;
obtaining a position of each of the one or more usable parking spaces and storing the position of each of the one or more usable parking spaces in a cache, and determining at least one of the one or more usable parking spaces as at least one candidate usable parking space;
receiving a selection instruction for the at least one candidate usable parking space to determine a target parking space; and
controlling the vehicle to park at the position of the target parking space,
wherein said receiving the selection instruction for the at least one candidate usable parking space to determine the target parking space comprises:
displaying at least one electronic icon representing the at least one candidate usable parking space on a vehicle-mounted display device; and
receiving the selection instruction for any of the at least one electronic icon, and determining the candidate usable parking space corresponding to the selected electronic icon as the target parking space,
**characterized in that** the automatic parking method further comprises, subsequent to displaying the at least one electronic icon representing the at least one candidate usable parking space on the vehicle-mounted display device:
detecting a parking lot in which the vehicle is currently located based on a current position of the vehicle, when the selection instruction for the electronic icon is not received;
obtaining a number of the parking lot and obtaining a parking space number of a parking space that a user is interested in based on the number of the parking lot; and
detecting, from the at least one candidate usable parking space displayed on the vehicle-mounted display device, a candidate usable parking space with a same parking space number as the parking space number of the parking space that the user is interested in, and determining the candidate usable parking space with the same parking space number as the target parking space.

2. The method according to claim 1, wherein said determining at least one of the one or more usable parking spaces as at least one candidate usable parking space comprises:
determining a relative distance between the position of each usable parking space in the cache and a current position of the vehicle, and determining at least one usable parking space each having the relative distance smaller than or equal to a specified distance threshold as at least one candidate usable parking space; or
obtaining a predetermined number of usable parking spaces from the cache as candidate usable parking spaces.

3. The method according to claim 1, wherein said displaying the at least one electronic icon representing the at least one candidate usable parking space on the vehicle-mounted display device comprises:
determining a relative position between the vehicle and each of the at least one candidate usable parking space based on a current position of the vehicle and the position of the candidate usable parking space; and
displaying an electronic icon of the vehicle at a fixed position on the vehicle-mounted display device, and displaying the electronic icon of each of the at least one candidate usable parking space on the vehicle-mounted display device based on the relative position between the vehicle and the candidate usable parking space.

4. The method according to claim 1, wherein said determining at least one of the one or more usable parking spaces as at least one candidate usable parking space comprises:
hiding a usable parking space that the user has missed but the vehicle has identified on the vehicle-mounted display device; and
displaying the usable parking space again in response to the user sliding a screen of the vehicle-mounted display device.

5. The method according to claim 1, further comprising, when the candidate usable parking space with a same parking space number as the parking space number of the parking space that the user is interested in is not detected:
obtaining world coordinates of the parking space that the user is interested in based on the parking space number, detecting the world coordinates of the parking space in the cache, and determining, from parking spaces in the cache, a usable parking space having the same detected world coordinates as the world coordinates of the parking space that the user is interested in as the target parking space.

6. A vehicle-mounted control system, comprising:
a first detecting unit (401) configured to detect a reachable region around a vehicle, and detect one or more usable parking spaces in the reachable region;
a storing unit (402) configured to obtain a position of each of the one or more parking spaces and store the position of each of the one or more usable parking spaces in a cache;
a first determining unit (403) configured to determine at least one of the one or more usable parking spaces as at least one candidate usable parking space;
a second determining unit (404) configured to receive a selection instruction for the at least one candidate usable parking space to determine a target parking space; and
a control unit (405) configured to control the vehicle to park at the position of the target parking space after the second determining unit (404) determines the target parking space,
wherein the second determining unit (404) comprises:
a display subunit (4041) configured to display at least one electronic icon representing the at least one candidate usable parking space on a vehicle-mounted display device; and
a determining subunit (4042) configured to receive the selection instruction for any of the at least one electronic icon, and determine the candidate usable parking space corresponding to the selected electronic icon as the target parking space,
**characterized in that** the vehicle-mounted control system further comprises:
a detecting unit (406) configured to detect a parking lot in which the vehicle is currently located based on a current position of the vehicle, when the selection instruction for the electronic icon is not received;
an obtaining unit (407) configured to obtain a number of the parking lot and obtain a parking space number of a parking space that a user is interested in based on the number of the parking lot; and
a third determining unit (408) configured to detect, from the at least one candidate usable parking space displayed on the vehicle-mounted display device, a candidate usable parking space with a same parking space number as the parking space number of the parking space that the user is interested in, and determine the candidate usable parking space with the same parking space number as the target parking space.

7. The vehicle-mounted control system according to claim 6, wherein the first determining unit (403) is configured to:
determine a relative distance between the position of each usable parking space in the cache and a current position of the vehicle, and determine at least one usable parking space each having the relative distance smaller than or equal to a specified distance threshold as at least one candidate usable parking space; or
obtain a predetermined number of usable parking spaces from the cache as candidate usable parking spaces.

8. The vehicle-mounted control system according to claim 6, wherein the display subunit (4041) is configured to:
determine a relative position between the vehicle and each of the at least one candidate usable parking space based on a current position of the vehicle and the position of the candidate usable parking space; and
display an electronic icon of the vehicle at a fixed position on the vehicle-mounted display device, and display the electronic icon of each of the at least one candidate usable parking space on the vehicle-mounted display device based on the relative position between the vehicle and the candidate usable parking space.

9. The vehicle-mounted control system according to claim 6, wherein the first determining unit (403) is further configured to:
hide a usable parking space that the user has missed but the vehicle has identified on the vehicle-mounted display device; and
display the usable parking space again in response to the user sliding a screen of the vehicle-mounted display device.

10. The vehicle-mounted control system according to claim 6, wherein the third determining unit (408) is further configured to, when the candidate usable parking space with a same parking space number as the parking space number of the parking space that the user is interested in is not detected, obtain world coordinates of the parking space that the user is interested in based on the parking space number, detect the world coordinates of the parking space in the cache, and determine, from parking spaces in the cache, a usable parking space having the same detected world coordinates as the world coordinates of the parking space that the user is interested in as the target parking space.

## Patentansprüche

1. Automatisches Parkverfahren auf der Basis von Multiparklückenerkennung, das Folgendes beinhaltet:
Erkennen einer erreichbaren Region um ein Fahrzeug und Erkennen einer oder mehrerer nutzbarer Parklücken in der erreichbaren Region;
Ermitteln einer Position jeder der ein oder mehreren nutzbaren Parklücken und Speichern der Position jeder der ein oder mehreren nutzbaren Parklücken in einem Cache, und Bestimmen mindestens einer der ein oder mehreren nutzbaren Parklücken als mindestens eine in Frage kommende nutzbare Parklücke;
Empfangen einer Auswahlanweisung für die mindestens eine in Frage kommende nutzbare Parklücke, um eine Zielparklücke zu bestimmen; und
Steuern des Fahrzeugs zum Parken an der Position der Zielparklücke,
wobei das genannte Empfangen der Auswahlanweisung für die mindestens eine in Frage kommende nutzbare Parklücke zum Bestimmen der Zielparklücke Folgendes beinhaltet:
Anzeigen mindestens eines elektronischen Symbols, das die mindestens eine in Frage kommende nutzbare Parklücke repräsentiert, auf einem am Fahrzeug montierten Anzeigegerät; und
Empfangen der Auswahlanweisung für ein beliebiges der mindestens einen elektronischen Symbole und Bestimmen der in Frage kommenden nutzbaren Parklücke entsprechend dem ausgewählten elektronischen Symbol als die Zielparklücke,
**dadurch gekennzeichnet, dass** das automatische Parkverfahren ferner, nach dem Anzeigen des mindestens einen elektronischen Symbols, das die mindestens eine in Frage kommende nutzbare Parklücke darstellt, auf dem am Fahrzeug montierten Anzeigegerät Folgendes beinhaltet:
Erkennen eines Parkplatzes, auf dem sich das Fahrzeug derzeit befindet, auf der Basis einer aktuellen Position des Fahrzeugs, wenn die Auswahlanweisung für das elektronische Symbol nicht empfangen wird;
Ermitteln einer Nummer des Parkplatzes und Ermitteln einer Parklückennummer einer Parklücke, an der ein Benutzer interessiert ist, auf der Basis der Nummer des Parkplatzes; und
Erkennen, aus der mindestens einen in Frage kommenden nutzbaren Parklücke, die auf dem am Fahrzeug montierten Anzeigegerät angezeigt wird, einer in Frage kommenden nutzbaren Parklücke mit derselben Parklückennummer wie die Parklückennummer der Parklücke, an der der Benutzer interessiert ist, und Bestimmen der in Frage kommenden nutzbaren Parklücke mit derselben Parklückennummer wie die Zielparklücke.

2. Verfahren nach Anspruch 1, wobei das genannte Bestimmen von mindestens einer der ein oder mehreren nutzbaren Parklücken als mindestens eine in Frage kommende nutzbare Parklücke Folgendes beinhaltet:
Bestimmen eines relativen Abstands zwischen der Position jeder nutzbaren Parklücke im Cache und einer aktuellen Position des Fahrzeugs, und Bestimmen mindestens einer nutzbaren Parklücke, bei der der relative Abstand gleich einem oder kleiner als ein spezifizierten/r Abstandsschwellenwert ist, als mindestens eine in Frage kommende nutzbare Parklücke; oder
Ermitteln einer vorbestimmten Anzahl von nutzbaren Parklücken aus dem Cache als in Frage kommende nutzbare Parklücke.

3. Verfahren nach Anspruch 1, wobei das genannte Anzeigen des mindestens einen elektronischen Symbols, das die mindestens eine in Frage kommende nutzbare Parklücke darstellt, auf dem am Fahrzeug montierten Anzeigegerät Folgendes beinhaltet:
Bestimmen einer relativen Position zwischen dem Fahrzeug und jeder der mindestens einen in Frage kommenden nutzbaren Parklücken auf der Basis einer aktuellen Position des Fahrzeugs und der Position der in Frage kommenden nutzbaren Parklücke; und
Anzeigen eines elektronischen Symbols des Fahrzeugs an einer festen Position auf dem am Fahrzeug montierten Anzeigegerät und Anzeigen des elektronischen Symbols jeder der mindestens einen in Frage kommenden nutzbaren Parklücken auf dem am Fahrzeug montierten Anzeigegerät auf der Basis der relativen Position zwischen dem Fahrzeug und der in Frage kommenden nutzbaren Parklücke.

4. Verfahren nach Anspruch 1, wobei das genannte Bestimmen mindestens einer der ein oder mehreren nutzbaren Parklücken als mindestens eine in Frage kommende nutzbare Parklücke Folgendes beinhaltet:
Ausblenden einer nutzbaren Parklücke, die der Benutzer verpasst, das Fahrzeug aber identifiziert hat, auf dem am Fahrzeug montierten Anzeigegerät; und
erneutes Anzeigen der nutzbaren Parklücke als Reaktion auf das Verschieben eines Bildschirms des im Fahrzeug montierten Anzeigegeräts durch den Benutzer.

5. Verfahren nach Anspruch 1, das ferner, wenn die in Frage kommende nutzbare Parklücke mit derselben Parklückennummer wie die Parklückennummer der Parklücke, an der der Benutzer interessiert ist, nicht erkannt wird, Folgendes beinhaltet:
Ermitteln von Weltkoordinaten der Parklücke, an der der Benutzer interessiert ist, auf der Basis der Parklückennummer, Erkennen der Weltkoordinaten der Parklücke im Cache, und Bestimmen, aus Parklücken im Cache, einer nutzbaren Parklücke mit denselben erkannten Weltkoordinaten wie die Weltkoordinaten der Parklücke, an der der Benutzer interessiert ist, als die Zielparklücke.

6. Fahrzeugmontiertes Steuersystem, das Folgendes umfasst:
eine erste Erkennungseinheit (401), konfiguriert zum Erkennen einer erreichbaren Region um ein Fahrzeug, und zum Erkennen einer oder mehrerer nutzbarer Parklücken in der erreichbaren Region;
eine Speichereinheit (402), konfiguriert zum Ermitteln einer Position jeder der ein oder mehreren Parklücken und zum Speichern der Position jeder der ein oder mehreren nutzbaren Parklücken in einem Cache;
eine erste Bestimmungseinheit (403), konfiguriert zum Bestimmen mindestens einer der ein oder mehreren nutzbaren Parklücken als mindestens eine in Frage kommende nutzbare Parklücke;
eine zweite Bestimmungseinheit (404), konfiguriert zum Empfangen einer Auswahlanweisung für die mindestens eine in Frage kommende nutzbare Parklücke, um eine Zielparklücke zu bestimmen; und
eine Steuereinheit (405), konfiguriert zum Steuern des Fahrzeug so, dass es an der Position der Zielparklücke parkt, nachdem die zweite Bestimmungseinheit (404) die Zielparklücke bestimmt hat,
wobei die zweite Bestimmungseinheit (404) Folgendes umfasst:
eine Anzeigesubeinheit (4041), konfiguriert zum Anzeigen mindestens eines elektronischen Symbols, das die mindestens eine in Frage kommende nutzbare Parklücke darstellt, auf einem am Fahrzeug montierten Anzeigegerät; und
eine Bestimmungssubeinheit (4042), konfiguriert zum Empfangen der Auswahlanweisung für ein beliebiges der mindestens einen elektronischen Symbole, und Bestimmen der in Frage kommenden nutzbaren Parklücke entsprechend dem ausgewählten elektronischen Symbol als die Zielparklücke,
**dadurch gekennzeichnet, dass** das fahrzeugmontierte Steuersystem ferner Folgendes umfasst:
eine Erkennungseinheit (406), konfiguriert zum Erkennen eines Parkplatzes, auf dem sich das Fahrzeug gerade befindet, auf der Basis einer aktuellen Position des Fahrzeugs, wenn die Auswahlanweisung für das elektronische Symbol nicht empfangen wird;
eine Ermittlungseinheit (407), konfiguriert zum Ermitteln einer Nummer des Parkplatzes und zum Ermitteln einer Parklückennummer einer Parklücke, an der ein Benutzer interessiert ist, auf der Basis der Nummer des Parkplatzes; und
eine dritte Bestimmungseinheit (408), konfiguriert zum Erkennen, aus der mindestens einen in Frage kommenden nutzbaren Parklücke, die auf dem am Fahrzeug montierten Anzeigegerät angezeigt wird, einer in Frage kommenden nutzbaren Parklücke mit derselben Parklückennummer wie die Parklückennummer der Parklücke, an der der Benutzer interessiert ist, und zum Bestimmen der in Frage kommenden nutzbaren Parklücke mit derselben Parklückennummer wie die Zielparklücke.

7. Fahrzeugmontiertes Steuersystem nach Anspruch 6, wobei die erste Bestimmungseinheit (403) konfiguriert ist zum:
Bestimmen eines relativen Abstands zwischen der Position jeder nutzbaren Parklücke im Cache und einer aktuellen Position des Fahrzeugs und Bestimmen mindestens einer nutzbaren Parklücke, bei der der relative Abstand gleich einem oder kleiner als ein spezifizierten/r Abstandsschwellenwert ist, als mindestens eine in Frage kommende nutzbare Parklücke; oder
Ermitteln einer vorbestimmten Anzahl von nutzbaren Parklücken aus dem Cache als in Frage kommende nutzbare Parklücken.

8. Fahrzeugmontiertes Steuersystem nach Anspruch 6, wobei die Anzeigesubeinheit (4041) konfiguriert ist zum:
Bestimmen einer relativen Position zwischen dem Fahrzeug und jeder der mindestens einen in Frage kommenden nutzbaren Parklücken auf der Basis einer aktuellen Position des Fahrzeugs und der Position der in Frage kommenden nutzbaren Parklücke; und
Anzeigen eines elektronischen Symbols des Fahrzeugs an einer festen Position auf dem fahrzeugmontierten Anzeigegerät und Anzeigen des elektronischen Symbols jeder der mindestens einen in Frage kommenden nutzbaren Parklücken auf dem am Fahrzeug montierten Anzeigegerät auf der Basis der relativen Position zwischen dem Fahrzeug und der in Frage kommenden nutzbaren Parklücke.

9. Fahrzeugmontiertes Steuersystem nach Anspruch 6, wobei die erste Bestimmungseinheit (403) ferner konfiguriert ist zum:
Ausblenden einer nutzbaren Parklücke, die der Benutzer verpasst, das Fahrzeug aber identifiziert hat, auf dem am Fahrzeug montierten Anzeigegerät; und
erneutes Anzeigen der nutzbaren Parklücke als Reaktion auf das Verschieben eines Bildschirms des am Fahrzeug montierten Anzeigegeräts durch den Benutzer.

10. Fahrzeugmontiertes Steuersystem nach Anspruch 6, wobei die dritte Bestimmungseinheit (408) ferner konfiguriert ist zum Ermitteln, wenn die in Frage kommende nutzbare Parklücke mit derselben Parklückennummer wie die Parklückennummer der Parklücke, an der der Benutzer interessiert ist, nicht erkannt wird, von Weltkoordinaten der Parklücke, an der der Benutzer interessiert ist, auf der Basis der Parklückennummer, zum Erkennen der Weltkoordinaten der Parklücke im Cache und zum Bestimmen, aus den Parklücken im Cache, einer nutzbaren Parklücke mit denselben erkannten Weltkoordinaten wie die Weltkoordinaten der Parklücke, an der der Benutzer interessiert ist, als Zielparklücke.

## Revendications

1. Procédé de stationnement automatique basé sur la détection d'espace de stationnement multiple, comprenant :
une détection d'une région atteignable autour d'un véhicule, et une détection d'un ou de plusieurs espaces de stationnement utilisables dans la région atteignable ;
une obtention d'une position de chacun des un ou plusieurs espaces de stationnement utilisables et un stockage de la position de chacun des un ou plusieurs espaces de stationnement utilisables dans un cache, et une détermination d'au moins un parmi les un ou plusieurs espaces de stationnement utilisables à titre d'au moins un espace de stationnement utilisable candidat ;
une réception d'une instruction de sélection de l'au moins un espace de stationnement utilisable candidat pour déterminer un espace de stationnement cible ; et
une commande du véhicule pour qu'il stationne à la position de l'espace de stationnement cible,
dans lequel ladite réception de l'instruction de sélection de l'au moins un espace de stationnement utilisable candidat pour déterminer l'espace de stationnement cible comprend :
un affichage d'au moins une icône électronique représentant l'au moins un espace de stationnement utilisable candidat sur un dispositif d'affichage monté sur véhicule ; et
une réception de l'instruction de sélection d'une quelconque de l'au moins une icône électronique, et une détermination de l'espace de stationnement utilisable candidat correspondant à l'icône électronique sélectionnée à titre d'espace de stationnement cible,
**caractérisé en ce que** le procédé de stationnement automatique comprend en outre, suite à l'affichage de l'au moins une icône électronique représentant l'au moins un espace de stationnement utilisable candidat sur le dispositif d'affichage monté sur véhicule :
une détection d'un parc de stationnement dans lequel le véhicule est actuellement situé sur la base d'une position actuelle du véhicule, lorsque l'instruction de sélection de l'icône électronique n'est pas reçue ;
une obtention d'un numéro du parc de stationnement et une obtention d'un numéro d'espace de stationnement d'un espace de stationnement qui intéresse un utilisateur sur la base du numéro du parc de stationnement ; et
une détection, à partir de l'au moins un espace de stationnement utilisable candidat affiché sur le dispositif d'affichage monté sur véhicule, d'un espace de stationnement utilisable candidat doté d'un même numéro d'espace de stationnement que le numéro d'espace de stationnement de l'espace de stationnement qui intéresse l'utilisateur, et une détermination de l'espace de stationnement utilisable candidat doté du même numéro d'espace de stationnement que l'espace de stationnement cible.

2. Procédé selon la revendication 1, dans lequel ladite détermination d'au moins un parmi les un ou plusieurs espaces de stationnement utilisables à titre d'au moins un espace de stationnement utilisable candidat comprend :
une détermination d'une distance relative entre la position de chaque espace de stationnement utilisable dans le cache et une position actuelle du véhicule, et une détermination d'au moins un espace de stationnement utilisable présentant chacun la distance relative inférieure ou égale à un seuil de distance spécifié à titre d'au moins un espace de stationnement utilisable candidat ; ou
une obtention d'un nombre prédéterminé d'espaces de stationnement utilisables à partir du cache à titre d'espaces de stationnement utilisables candidats.

3. Procédé selon la revendication 1, dans lequel ledit affichage de l'au moins une icône électronique représentant l'au moins un espace de stationnement utilisable candidat sur le dispositif d'affichage monté sur véhicule comprend :
une détermination d'une position relative entre le véhicule et chacun de l'au moins un espace de stationnement utilisable candidat sur la base d'une position actuelle du véhicule et de la position de l'espace de stationnement utilisable candidat ; et
un affichage d'une icône électronique du véhicule à une position fixe sur le dispositif d'affichage monté sur véhicule, et un affichage de l'icône électronique de chacun de l'au moins un espace de stationnement utilisable candidat sur le dispositif d'affichage monté sur véhicule sur la base de la position relative entre le véhicule et l'espace de stationnement utilisable candidat.

4. Procédé selon la revendication 1, dans lequel ladite détermination d'au moins un parmi les un ou plusieurs espaces de stationnement utilisables à titre d'au moins un espace de stationnement utilisable candidat comprend :
une dissimulation d'un espace de stationnement utilisable que l'utilisateur a raté mais que le véhicule a identifié sur le dispositif d'affichage monté sur véhicule ; et
un affichage de l'espace de stationnement utilisable à nouveau en réponse à un glissement par l'utilisateur d'un écran du dispositif d'affichage monté sur véhicule.

5. Procédé selon la revendication 1, comprenant en outre, lorsque l'espace de stationnement utilisable candidat doté d'un même numéro d'espace de stationnement à titre de numéro d'espace de stationnement de l'espace de stationnement qui intéresse l'utilisateur n'est pas détecté :
une obtention de coordonnées globales de l'espace de stationnement qui intéresse l'utilisateur sur la base du numéro d'espace de stationnement, une détection des coordonnées globales de l'espace de stationnement dans le cache, et une détermination, à partir d'espaces de stationnement dans le cache, d'un espace de stationnement utilisable présentant les mêmes coordonnées globales détectées que les coordonnées globales de l'espace de stationnement qui intéresse l'utilisateur à titre d'espace de stationnement cible.

6. Système de commande monté sur véhicule, comprenant :
une première unité de détection (401) configurée pour détecter une région atteignable autour d'un véhicule, et détecter un ou plusieurs espaces de stationnement utilisables dans la région atteignable ;
une unité de stockage (402) configurée pour obtenir une position de chacun des un ou plusieurs espaces de stationnement et stocker la position de chacun des un ou plusieurs espaces de stationnement utilisables dans un cache ;
une première unité de détermination (403) configurée pour déterminer au moins un parmi les un ou plusieurs espaces de stationnement utilisables à titre d'au moins un espace de stationnement utilisable candidat ;
une deuxième unité de détermination (404) configurée pour recevoir une instruction de sélection de l'au moins un espace de stationnement utilisable candidat pour déterminer un espace de stationnement cible ; et
une unité de commande (405) configurée pour commander le véhicule pour qu'il stationne à la position de l'espace de stationnement cible après que la deuxième unité de détermination (404) a déterminé l'espace de stationnement cible,
dans lequel la deuxième unité de détermination (404) comprend :
une sous-unité d'affichage (4041) configurée pour afficher au moins une icône électronique représentant l'au moins un espace de stationnement utilisable candidat sur un dispositif d'affichage monté sur véhicule ; et
une sous-unité de détermination (4042) configurée pour recevoir l'instruction de sélection d'une quelconque de l'au moins une icône électronique, et déterminer l'espace de stationnement utilisable candidat correspondant à l'icône électronique sélectionnée à titre d'espace de stationnement cible,
**caractérisé en ce que** le système de commande monté sur véhicule comprend en outre :
une unité de détection (406) configurée pour détecter un parc de stationnement dans lequel le véhicule est actuellement situé sur la base d'une position actuelle du véhicule, lorsque l'instruction de sélection de l'icône électronique n'est pas reçue ;
une unité d'obtention (407) configurée pour obtenir un numéro du parc de stationnement et obtenir un numéro d'espace de stationnement d'un espace de stationnement qui intéresse un utilisateur sur la base du numéro du parc de stationnement ; et
une troisième unité de détermination (408) configurée pour détecter, à partir de l'au moins un espace de stationnement utilisable candidat affiché sur le dispositif d'affichage monté sur véhicule, un espace de stationnement utilisable candidat doté d'un même numéro d'espace de stationnement que le numéro d'espace de stationnement de l'espace de stationnement qui intéresse l'utilisateur, et déterminer l'espace de stationnement utilisable candidat doté du même numéro d'espace de stationnement que l'espace de stationnement cible.

7. Système de commande monté sur véhicule selon la revendication 6, dans lequel la première unité de détermination (403) est configurée pour :
déterminer une distance relative entre la position de chaque espace de stationnement utilisable dans le cache et une position actuelle du véhicule, et déterminer au moins un espace de stationnement utilisable présentant chacun la distance relative inférieure ou égale à un seuil de distance spécifié à titre d'au moins un espace de stationnement utilisable candidat ; ou
obtenir un nombre prédéterminé d'espaces de stationnement utilisables à partir du cache à titre d'espaces de stationnement utilisables candidats.

8. Système de commande monté sur véhicule selon la revendication 6, dans lequel l'unité d'affichage (4041) est configurée pour :
déterminer une position relative entre le véhicule et chacun de l'au moins un espace de stationnement utilisable candidat sur la base d'une position actuelle du véhicule et de la position de l'espace de stationnement utilisable candidat ; et
afficher une icône électronique du véhicule à une position fixe sur le dispositif d'affichage monté sur véhicule, et afficher l'icône électronique de chacun de l'au moins un espace de stationnement utilisable candidat sur le dispositif d'affichage monté sur véhicule sur la base de la position relative entre le véhicule et l'espace de stationnement utilisable candidat.

9. Système de commande monté sur véhicule selon la revendication 6, dans lequel la première unité de détermination (403) est en outre configurée pour :
dissimuler un espace de stationnement utilisable que l'utilisateur a raté mais que le véhicule a identifié sur le dispositif d'affichage monté sur véhicule ; et
afficher l'espace de stationnement utilisable à nouveau en réponse à un glissement par l'utilisateur d'un écran du dispositif d'affichage monté sur véhicule.

10. Système de commande monté sur véhicule selon la revendication 6, dans lequel la troisième unité de détermination (408) est en outre configurée pour, lorsque l'espace de stationnement utilisable candidat doté d'un même numéro d'espace de stationnement que le numéro d'espace de stationnement de l'espace de stationnement qui intéresse l'utilisateur n'est pas détecté, obtenir des coordonnées globales de l'espace de stationnement qui intéresse l'utilisateur sur la base du numéro d'espace de stationnement, détecter les coordonnées globales de l'espace de stationnement dans le cache, et déterminer, à partir d'espaces de stationnement dans le cache, un espace de stationnement utilisable présentant les mêmes coordonnées globales détectées que les coordonnées globales de l'espace de stationnement qui intéresse l'utilisateur à titre d'espace de stationnement cible.
